# EUROPÄISCHE PATENTSCHRIFT

(11) **EP 0 356 661 B1**
(45) Veröffentlichungstag und Bekanntmachung des Hinweises auf die Patenterteilung: **27.10.1993**
(21) Anmeldenummer: 89112524.7
(22) Anmeldetag: 08.07.1989
(51) Int. Cl.: H04N 3/185, H04N 3/195, H04N 5/63, H01F 19/00, H01F 27/34, G05F 1/46

(54) **Geregeltes Schaltnetzteil mit Hochspannungsgenerator für ein Fernsehgerät**
Regulated power supply with a high-voltage generator for a television set
Alimentation régulée avec générateur de haute tension pour un appareil de télévision

(30) Priorität: 26.08.1988 DE 3828984
(43) Veröffentlichungstag der Anmeldung: 07.03.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Luber, Günter c/o Grundig E.M.V., D-8510 Fürth/Bay (DE)

(56) Entgegenhaltungen:
- EP-A- 0 113 974
- EP-A- 0 132 693
- EP-A- 0 163 235
- DE-A- 2 305 957
- DE-A- 3 505 976
- FR-A- 2 386 214
- US-A- 4 692 852

## Beschreibung

Die Erfindung betrifft ein freischwingendes Schaltnetzteil für ein Fernsehgerät, das als Sperrwandler im Resonanzbetrieb arbeitet und deshalb einen sinusförmigen Spannungsverlauf am Leistungs-Schalttransistor aufweist. Durch einen besonderen Aufbau des Transformators wird ein günstiges Verhalten im Hinblick auf Regelung der Sekundärspannungen, magnetisches Streufeld und Wirkungsgrad erreicht.

Aus der Europäischen Patentanmeldung EP-A-0 132 693 ist ein Schaltnetzteil bekannt, mit dem Betriebsspannungen einschließlich der Hochspannung für ein Bildwiedergabegerät erzeugt werden, die nach Maßgabe der Abweichung dieser Spannungen von den Sollwerten durch Pulsbreitenmodulation der Ansteuerung des Schalttransistors geregelt werden.

Aus der Europäischen Patentanmeldung EP-A-0 251 551 ist ebenfalls ein Schaltnetzteil mit Sperrwandler und Pulsbreitenregelung bekannt, bei dem die Regelung durch bestimmte magnetische Verkopplung zwischen primärseitigen Hilfswicklungen und den sekundärseitigen Betriebsspannungswicklungen eingestellt wird.

Aus der Europäischen Patentanmeldung EP-A-0 163 235 ist ein Schaltnetzteil bekannt, bei dem der Transformator mit einer Diodensplitwicklung für die Hochspannungserzeugung ausgerüstet ist.

Aus der Europäischen Patentanmeldung EP-A-0 113 235 ist ein pulsbreitengeregeltes Sperrwandler-Schaltnetzteil mit auf die Resonanzfrequenz des Transformators abgestimmter Schaltfrequenz bekannt.

Aus der Deutschen Offenlegungsschrift DE-A-2 305 957 ist ein Transformator für Schaltnetzteile bekannt, der als Doppel-E-Kern mit mehreren Teilluftspalten im Mittelschenkel ausgebildet ist.

Aus der Deutschen Offenlegungsschrift DE-A-35 05 976 ist schließlich entnehmbar, wie durch speziell bemessene Luftspalte bei einem Schaltnetzteiltransformator bestimmte Kopplungsverhältnisse erreicht werden können.

Demgegenüber ist es Aufgabe der Erfindung, einen besonderen Aufbau eines Schaltnetzteils anzugeben, das als Sperrwandler im Resonanzbetrieb arbeitet, geringe Verlustleistung hat, ein günstiges Regelverhalten hinsichtlich der Sekundärspannungen aufweist und im Hinblick auf magnetische Streufelder besonderes vorteilhaft ist. Hierzu ist das Schaltnetzteil entsprechend der Merkmalkombination nach Anspruchs 1 aufgebaut.

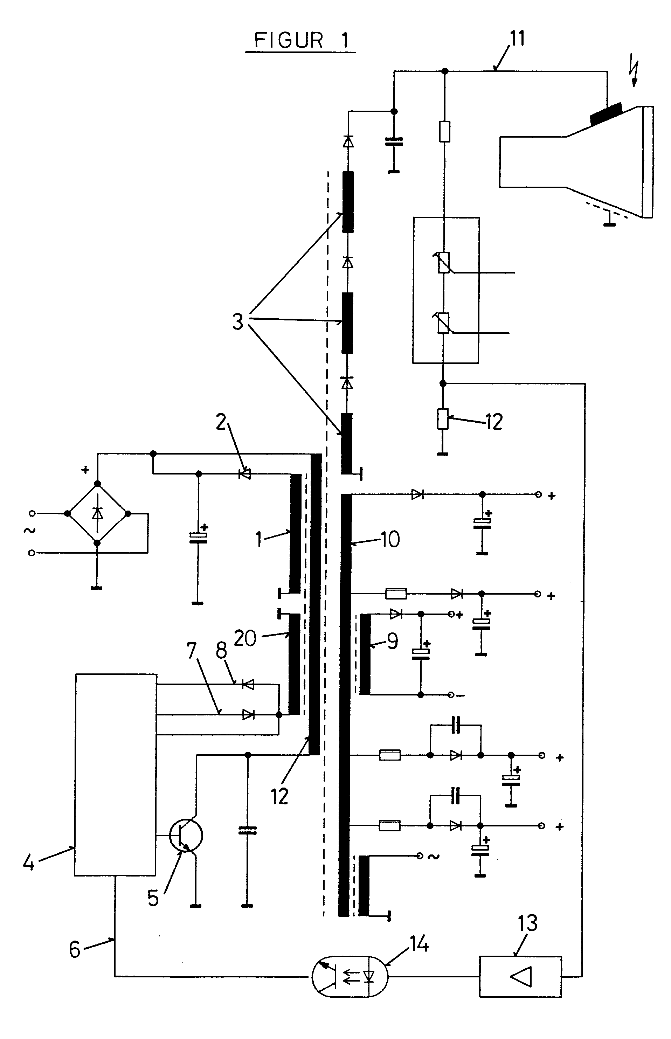

Das erfindungsgemäße Schaltnetzteil wird nach Figur 1 von einem geregelten Oszillator 4 angesteuert, dessen Frequenz durch die Resonanzfrequenz des Transformators bestimmt ist. Hierzu ist eine Wicklung 20 des Transformators, die zugleich zur Erzeugung einer Regelspannung 7 und der Versorgungsspannung 8 für den Oszillator 4 benutzt wird, in den Oszillatorkreis einbezogen. Der geregelte Oszillator 4 liefert die Ansteuerimpulse für den Leistungsschalttransistor 5, die Impulse werden in der Breite gesteuert und zwar bereits innerhalb des Oszillatorbausteins nach Maßgabe der Addition zweier Regelspannungen, von denen eine Spannung 7 aus der in den Oszillatorkreis einbezogenen primärseitigen Hilfswicklung 20, die andere Spannung 6 aus der sekundärseitigen Hochspannung gewonnen und über den Optokoppler 14 galvanisch getrennt auf die Primärseite übertragen wird. Die aus der primärseitigen Hilfswicklung 20 gewonnene Regelspannung 7 ist durch die Kopplungsverhältnisse innerhalb des Transformators überwiegend abhängig von den an den beiden Sekundärwicklungen 9, 10 anliegenden Spannungen, die für das stabile Betriebsverhalten des Gerätes besonders wichtig sind.

Neben der durch den Leistungs-Schalttransistor 5 angesteuerten Primärwicklung 12 ist noch eine weitere primärseitige Hilfswicklung 1 vorgesehen, die durch die Kopplungsverhältnisse innerhalb des Trafos bedingt die sekundärseitige Hochspannungswicklung 3 bedämpft. Die dabei gewonnene Energie wird über die Diode 2 in die Stromversorgung zurückgespeist. Ohne die Bedämpfung der Hochspannungswicklung 3 würde diese eine Schwingung in Eigenresonanz erzeugen, die dem Sägezahnstrom, der durch den Leistungs-Schalttransistor 5 fließt, überlagert wäre.

Die Eigenresonanz der Hochspannungswicklung (3) liegt wegen der angewandten Diodensplit-Wickeltechnik wesentlich höher als die Schaltfrequenz bzw. Resonanzfrequenz des Netzteils. Ohne die Bedämpfung der Eigenschwingung der Hochspannungswicklung würde die den Schaltsignalen überlagerte Schwingung zu Instabilitäten des Regelkreises führen. Die Regelung der Hochspannung 11 wird dadurch erreicht, daß am masseseitigen Widerstand 12 eines Spannungsteilers eine von der Hochspannung abhängige Spannung abgegriffen und einem Differenzverstärker 13 zugeführt wird, dessen Ausgangssignal über einen Optokoppler 14 galvanisch getrennt in die Netzstromkreise übertragen und dort additiv über die Leitung 6 in den Regelkreis im geregelten Oszillator 4 eingespeist wird.

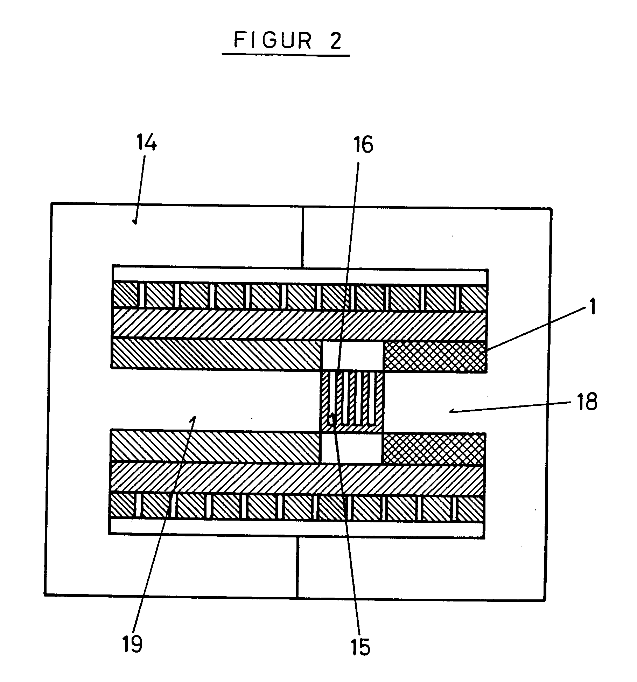

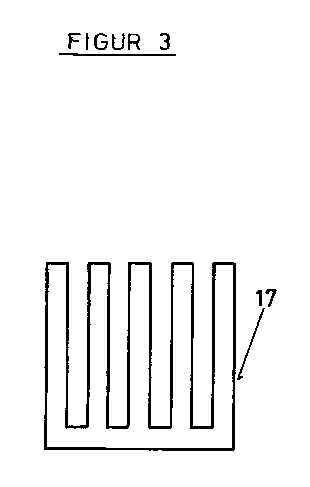

Der Ferritkern 14 des Transformators des Schaltnetzteils ist nach Figur 2 als Doppel-E-Kern ausgebildet, wobei erfindungsgemäß die Mittelschenkel der beiden E-Kernhälften unterschiedlich lang ausgebildet und derart dimensioniert sind, daß zwischen den Mittelschenkeln ein Luftspalt mit einer Mindestlänge von 2,5 mm entsteht. Ein derartiger Luftspalt verursacht im Betrieb ein räumlich ausgedehntes magnetisches Streufeld, das in benachbarten Kupferwicklungen zu erheblichen Wirbelströmen, zu Verlustleistung und unzulässiger Erwärmung führen kann. Deshalb wird erfindungsgemäß zur räumlichen Begrenzung des magnetischen Streufeldes durch Einlegen von Ferritscheiben 15, die in Materialbeschaffenheit und Querschnitt dem Doppel-E-Kern entsprechen, der Luftspalt in mehrere Teilluftspalte 16 aufgeteilt, derart, daß die Addition der Längen der Teilluftspalte der Länge des insgesamt erforderlichen Luftspaltes entspricht. Durch diese erfindungsgemäße Maßnahme wird das magnetische Streufeld räumlich erheblich eingeengt, und die Wirbelstromverluste in den benachbaren Wicklungen werden vermieden. Zur Halterung und Fixierung der Ferritscheiben innerhalb des Luftspaltes des Doppel-E-Kernes ist ein kammartig ausgebildetes Kunststoffteil 17 nach Figur 3 vorgesehen, das mittels Kleber oder Vergußmasse mit den Ferritscheiben und dem Doppel-E-Kern fest verbunden wird. Obwohl der Luftspalt mit Kunststoff ausgefüllt ist, bleibt die magnetische Wirkung unverändert, weil das Material sich magnetisch wie Luft verhält. Luftspalt, Ferritscheiben und Kunststoffteil sind zur klareren Darstellung in Fig. 1 nicht maßstabsgerecht gezeichnet.

Zur Herstellung der für die Funktion des Schaltnetzteil-Transformators wichtigen Kopplungsverhältnisse ist der Wicklungsaufbau derart, daß die Dämpfungswicklung 1 auf dem kurzen Mittelschenkel 18 des Doppel-E-Kernes untergebracht ist, alle übrigen Primärwicklungen auf dem langen Mittelschenkel 19 des Doppel-E-Kernes vorgesehen sind, während die Sekundärwicklungen über beide Mittelschenkel verteilt sind und zwar vom Kern nach außen gerechnet in der Reihenfolge: Primärwicklungen, Sekundärwicklungen für die Betriebsstromkreise, Hochspannungswicklung in Split-Wickeltechnik mit eingebauten Dioden. Durch diesen Aufbau werden die notwendigen Kopplungsverhältnisse und die sichere elektrische Trennung zwischen den primärseitigen Netzstromkreisen und den sekundärseitigen Betriebsstromkreisen erreicht.

## Patentansprüche

1. Pulsbreitengeregeltes Sperrwandler-Schaltnetzteil mit Hochspannungsgenerator für ein Fernsehgerät, mit galvanischer Trennung zwischen Betriebsstromkreisen und Netzstromkreisen, mit einem Wandler-Transformator mit einer primärseitigen Dämpfungswicklung mit Diode zur Energierückgewinnung, sowie mit einem Doppel-E-Kern mit zwei Kernhälften für den Transformator, gekennzeichnet durch die Kombination folgender Merkmale :
- Das Schaltnetzteil weist einen Ansteueroszillator und einen Regelkreis auf.
- Die Resonanzfrequenz des Transformators ist auf die Schaltfrequenz des pulsbreitengeregelten Ansteueroszillators (4) abgestimmt.
- Die Regelung der Betriebsspannungen einschließlich der Hochspannung erfolgt derart, daß der Regelkreis durch entsprechende Wahl der Kopplungsverhältnisse im Transformator und über einen an sich bekannten Optokoppler (14) überwiegend durch die aus der Addition der Störgrößen der Hochspannung (11) und derjenigen an den Sekundärwicklungen (9, 10) des Transformators anliegenden Niedervolt-Betriebsspannungen, die für den einwandfreien Betrieb des Fernsehgerätes besonders konstant sein müssen, beeinflußt wird.
- Die primärseitige Dämpfungswicklung (1) ist magnetisch lose mit den übrigen Wicklungen gekoppelt, derart, daß durch diese Wicklung die ansonsten durch die Eigenresonanz der Hochspannungswicklung (3) des Transformators bedingte, während der Leitphase eines eine weitere primärseitige Wicklung (12) austeuernden, im Schaltnetzteil befindlichen Leistungs-Schalttransistors (5) auftretende Sinusschwingung unterdrückt wird.
- Die Mittelschenkel der beiden Kernhälften sind unterschiedlich lang; auf dem kurzen Mittelschenkel (18) der einen Kernhälfte ist die primärseitige Dämpfungswicklung (1) und auf dem langen Mittelschenkel (19) der anderen Kernhälfte sind die übrigen Primärwicklungen untergebracht, während die Sekundärwicklungen über beide Mittelschenkel verteilt sind und zwischen den unterschiedlich langen Mittelschenkeln des Kernes ein Luftspalt mit einer Mindestlänge von 2,5 mm vorgesehen ist.

2. Pulsbreitengeregeltes Sperrwandler-Schaltnetzteil nach Anspruch 1, **dadurch gekennzeichnet,** daß der Luftspalt zwischen den Mittelschenkeln des Kernes durch eingelegte Plättchen (15), die in Materialbeschaffenheit und Querschnitt dem Kern entsprechen, in mehrere Luftspalte aufgeteilt ist, so daß die Summe der Längen der einzelnen Luftspalte die wirksame Gesamtlänge des Luftspaltes ergibt.

3. Pulsbreitengeregeltes Sperrwandler-Schaltnetzteil nach Anspruch 2, **dadurch gekennzeichnet,** daß die eingelegten Plättchen (15) durch ein mit Schlitzen versehenes Kunststoffteil (17) in ihrer Position gehaltert werden, derart, daß die mit Kunststoff gefüllten Spalte in der Länge gleich sind.

## Claims

1. Pulse-width controlled flyback converter switched-mode power supply having a high-voltage generator for a television set, having electrical isolation between operating circuits and mains circuits, having a converter transformer with a primary-side damper winding with a diode for energy recovery, and having a double-E core with two core halves for the transformer, characterised by the combination of the following features:
- The switched-mode power supply has a drive oscillator and a control loop.
- The resonant frequency of the transformer is tuned to the switching frequency of the pulse-width controlled drive oscillator (4).
- The control of the operating voltages including the high voltage is performed in such a way that the control loop is influenced by appropriate selection of the coupling conditions in the transformer and, via an optocoupler (14) known per se, chiefly by the low-voltage operating voltages [lacuna] from the addition of the influencing quantities of the high voltage (11) and those influencing quantites present at the secondary windings (9, 10) of the transformer, which low-voltage operating voltages must be particularly constant for the trouble-free operation of the television set.
- The primary-side damper winding (1) is coupled to the remaining windings in a magnetically loose fashion in such a way that by means of this winding the sinusoidal oscillation otherwise produced by the self-resonant frequency of the high-voltage winding (3) of the transformer and occurring during the conducting phase of a power switching transistor (5) driving a further primary-side winding (12) and located in the switched-mode power supply is suppressed.
- The middle limbs of the two core halves are of different length; the primary-side damper winding (1) is accommodated on the short middle limb (18) of the one core half and the remaining primary windings are accommodated on the long middle limb (19) of the other core halves, while the secondary windings are distributed over both middle limbs and an air gap having a minimum length of 2.5 mm is provided between the middle limbs of the core, which have different lengths.

2. Pulse-width controlled flyback converter switched-mode power supply according to Claim 1, characterised in that the air gap between the middle limbs of the core is divided into a plurality of air gaps by inserted platelets (15) which correspond to the core in material properties and cross-section, with the result that the sum of the lengths of the individual air gaps produces the effective total length of the air gap.

3. Pulse width controlled flyback converter switched-mode power supply according to Claim 2, characterised in that by means of a plastic part (17) provided with slots the inserted platelets (15) are held in their position in such a way that the gaps filled with plastic are equal in length.

## Revendications

1. Bloc d'alimentation à découpage à convertisseur à oscillateur bloqué, à régulation de la largeur d'impulsion, qui comporte un générateur de haute tension pour un appareil de télévision, avec séparation galvanique entre des circuits de service et des circuits d'alimentation, comportant un transformateur - convertisseur équipé d'un enroulement d'amortissement situé côté primaire et pourvu d'une diode pour la récupération d'énergie, ainsi qu'un noyau en E double formé de deux moitiés pour le transformateur, caractérisé par la combinaison des caractéristiques suivantes :
- le bloc d'alimentation à découpage possède un oscillateur de commande et un circuit de régulation;
- la fréquence de résonance du transformateur est accordée sur la fréquence de découpage de l'oscillateur de commande (4), à régulation de la largeur d'impulsion;
- le réglage des tensions de service y compris la haute tension s'effectue de telle sorte que le circuit de régulation est influencé grâce au choix correspondant des rapports de couplage dans le transformateur et de façon prépondérante, moyennant l'utilisation d'un opto-coupleur (14) connu en soi, par les basses tensions de service, qui sont présentes à partir de l'addition des grandeurs parasites de la haute tension (11) et des grandeurs parasites présentes dans les enroulements secondaires (9,10) du transformateur, et qui doivent être particulièrement constantes pour un fonctionnement parfait de l'appareil de télévision;
- l'enroulement d'amortissement (1) situé côté primaire est couplé magnétiquement de façon lâche aux autres enroulements de telle sorte que cet enroulement supprime l'oscillation sinusoïdale, qui est par ailleurs provoquée par la fréquence de résonance de l'enroulement à haute tension (3) du transformateur et apparaît pendant la phase de conduction d'un transistor de commutation de puissance (5) qui commande un autre enroulement (12) situé côté primaire, et est situé dans le bloc d'alimentation à découpage;
- les branches médianes des deux moitiés du noyau ont des longueurs différentes, l'enroulement d'amortissement (1) situé côté primaire étant disposé sur la branche médiane la plus courte (18) d'une moitié du noyau et les autres enroulements primaires étant disposés sur la branche médiane la plus longue (19) de l'autre moitié du noyau, tandis que les enroulements secondaires sont répartis sur les deux branches médianes et qu'un entrefer possédant une longueur minimale de 2,5 mm est prévu entre les branches médianes de longueurs différentes du noyau.

2. Bloc d'alimentation à découpage a convertisseur à oscillateur bloqué, à régulation de largeur d'impulsion, selon la revendication 1, caractérisé en ce que l'entrefer présent entre les branches médianes du noyau est divisé en plusieurs entrefers au moyen de l'insertion de plaquettes (15), dont les caractéristiques du matériau et la section transversale correspondent à celles du noyau, de sorte que la somme des longueurs des différents entrefers fournit la longueur totale effective de l'entrefer.

3. Bloc d'alimentation à découpage a convertisseur à oscillateur bloqué, à régulation de largeur d'impulsion, selon la revendication 2, caractérisé en ce que les plaquettes insérées (15) sont maintenues dans leur position par une pièce en matière plastique (17) pourvue de fentes de sorte que les espaces remplis par la matière plastique possèdent des longueurs identiques.
